# EUROPEAN PATENT APPLICATION

(11) **EP 1 589 389 A2**
(43) Date of publication of application: **26.10.2005**
(21) Application number: 05251778.6
(22) Date of filing: 23.03.2005
(51) Int. Cl.: G05B 19/408

(54) **Sequence program editing apparatus**

(30) Priority: 29.03.2004 JP 2004095766
(71) Applicant: FANUC LTD, Minamitsuru-gun, Yamanashi 401-0597 (JP)
(72) Inventor: Maeda, Kimio, Hachioji-shi Tokyo 192-0354 (JP); Yamamoto, Kiharu, Room 14-405, Minamitsuru-gun Yamanashi 401-0511 (JP)
(74) Representative: Billington, Lawrence Emlyn

(57) **Abstract**

A sequence program editing apparatus comprises a source program memory section (100) which stores message groups classified as first to fourth message groups according to languages or operator skill levels, together with ladder data, symbolic data, and other types of data of a sequence program. A message group is selected by selecting means (101), and its data is stored in a first memory section (103). The message group data in the first memory section (103) is read into an editing memory section (106) and edited, and the edited message group data is stored in a second memory section (110). The data stored in the first or second memory section (103, 110) is sent to a programmable controller (201) in a numerical controller (20).

## Description

### BACKGROUND OF THE INVENTION

### 1. Field of the Invention

The present invention relates to an apparatus for editing sequence programs used in programmable controllers and other controllers.

### 2. Description of the Related Art

A sequence program used in a programmable controller installed in a control unit such as a numerical controller usually comprises ladder data, symbolic data, message data, and other types of data. When a modification to the sequence program is made, the entire sequence program stored in the programmable controller in the control unit is transferred to a sequence program editing apparatus and modified or corrected thereon.

Operators of programmable controllers may use different languages. To accommodate this, numerical controllers and other devices in which a sequence program stores messages in a plurality of languages and displays only messages in a selected language have been developed (see Japanese patent application No. 2004-21335).

Another known programmable controller uses different messages according to the skill level of the operator of the programmable controller. The operator's skill level indicates the extent to which the operator is familiar with the sequence program and the machine controlled by the sequence program. Operator skill levels are determined according to whether the operator can understand specialized terms used in messages, to whether, in the event of a part failure, the operator can replace the part and recover from the failure by himself, and to other considerations. For example, a first message group may be a group of messages at operator skill level 1 that are intended for operators familiar with the machine; the messages describe error status using specialized terms or give the operators instructions. A second message group may be a group of messages at operator skill level 2 that are prepared for operators not familiar with the machine; the messages give instructions without using specialized terms when an error or another problem occurs, and indicate that skilled maintenance personnel should take responsibility for part replacement. Thus it is known that messages can be displayed on a machine controlled by a sequence program according to the operator's level of familiarity with the sequence program and machine.

Conventionally, an entire sequence program is sent to a sequence program editing apparatus even for modification or correction of a single message in the sequence program, and the entire sequence program is processed on the sequence program editing apparatus to modify or correct the message in the sequence program. The sequence program comprises ladder data, symbolic data, message data, and other types of data; as described above, a plurality of message groups may be prepared separately in different languages such as, for example, Japanese, English, German, and French or for different operator skill levels, resulting in much information. Then it takes much time to transfer this lengthy sequence program to the programmable controller provided in the control unit for the machine and transfer it back from the programmable controller to the sequence program editing apparatus.

Another problem is that non-message data in the same language as the message to be corrected or modified may also be modified mistakenly because the entire sequence program is processed.

### SUMMARY OF THE INVENTION

The present invention relates to a sequence program editing apparatus for editing messages that is be displayed on a display screen while a programmable controller is in operation. The sequence program editing apparatus according to the present invention comprises source program storage means storing a sequence program that includes a plurality of message groups, first selecting means for selecting any one of the message groups from the source program storage means, first data converting means for converting the data of the message groups selected by the first selecting means to message group data transmissible to the programmable controller, and first storage means for storing the message group data generated by the first data converting means.

The sequence program editing apparatus of the present invention may further comprise second selecting means for selecting any one of the message groups stored in the first storage means, data inverting means for converting the transmissible message data generated by the first data converting means to the original message group data from which the transmissible message group data was generated, editing storage means for storing for editing purposes the message group data generated by the data inverting means, editing means for editing the message group data stored in the editing storage means, second data converting means for converting the message group data stored in the editing storage means to message group data transmissible to the programmable controller, and second storage means for storing the message group data generated by the second data converting means.

The sequence program editing apparatus may further comprise third selecting means for selecting any one of the message groups stored in the editing storage means so that the second data converting means can convert the data of the message groups selected by the third selecting means from the editing storage means to message group data transmissible to the programmable controller.

The sequence program editing apparatus may further comprise data transmission means for sending message group data, which is transmissible to the programmable controller and stored in the first storage means, to the programmable controller, and for receiving message group data stored in the programmable controller.

The message described above may be grouped by language or according to the skill level of the operator who operates the sequence program.

The above-described features of the present invention enable the message data in the sequence program to be handled separately from the ladder data, symbolic data, and other types of data, and to be transmitted and edited alone, resulting in short transfer time. In addition, since message data editing can be restricted to a desired message group, incorrect processing such as inadvertent correction or modification of other data in the sequence program can be avoided during editing of the message data.

### BRIEF DESCRIPTION OF THE DRAWINGS

The purposes and advantages of the present invention, including those described above, will be clarified by reference to the attached drawings in combination with the description of the embodiment presented below. Of these drawings:
FIG. 1 is a functional block diagram showing a sequence program editing apparatus in an embodiment of the present invention and a numerical controller including a programmable,controller that stores and executes a sequence program edited at the sequence program editing apparatus;
FIG. 2 shows an exemplary message editing screen displayed on the display unit attached to the sequence program editing apparatus in FIG. 1;
FIG. 3 illustrates an example in which a plurality of message groups are stored by language in the source program memory section in the sequence program editing apparatus in FIG. 1;
FIG. 4 illustrates another example in which a plurality of message groups are stored for each operator skill level in the source program memory section in the sequence program editing apparatus in FIG. 1;
FIG. 5 illustrates how the sequence program editing apparatus in FIG. 1 is connected to the numerical controller, display unit/data input unit, and external storage medium; and
FIG. 6 is a flowchart showing processes executed by the sequence program editing apparatus in FIG. 1 in the message group transmission and editing mode.

### DESCRIPTION OF THE EMBODIMENT

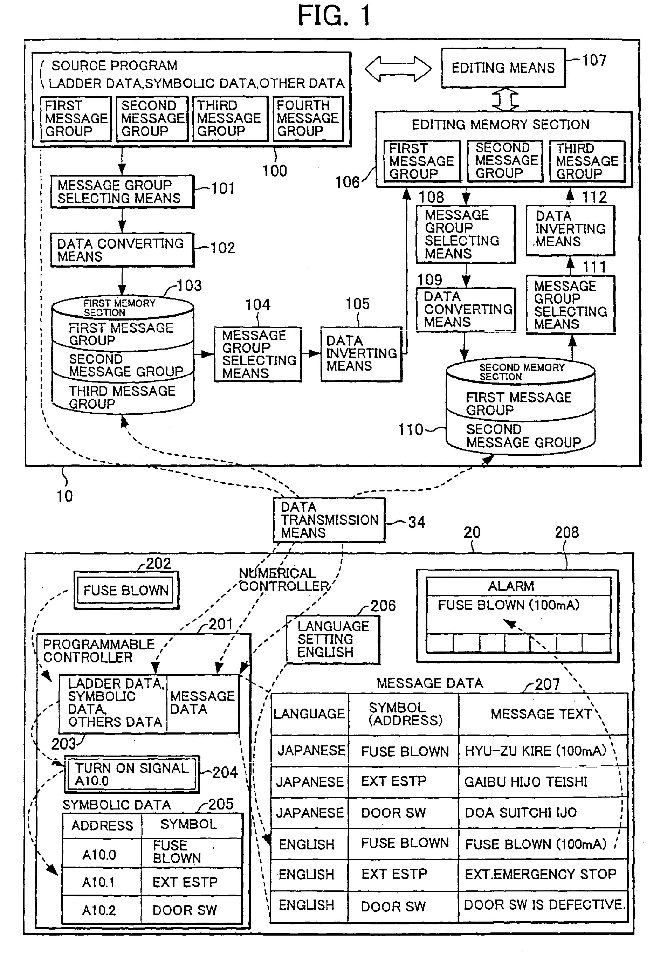

FIG. 1 is a functional block diagram showing a sequence program editing apparatus in an embodiment of the present invention and a numerical controller including a programmable controller that stores and executes a sequence program edited at the sequence program editing apparatus.

The sequence program editing apparatus 10 includes a source program memory section 100 in which the source program of a sequence program to be edited is stored. The source program of the sequence program comprises ladder data, symbolic data, message data, and other types of data. In this embodiment, there are a plurality of message groups; in the example shown in FIG. 1, first to fourth message groups are stored. The messages are grouped by language or operator skill level.

When language-specific message groups are prepared, data representing identical messages in different languages, such as, for example, Japanese, English, German, and French, is stored as respective language groups. When message groups are prepared by operator skill level, the message groups are classified according to the skill of the operator who operates the machine controlled by the control unit incorporating the sequence program. For example, if there are four message groups as shown in FIG. 1, then the first message group may be addressed to operators who are expert in the sequence program and in the machine controlled by the sequence program; the second message group, third message group, and fourth message group may be addressed to moderately skilled operators, less skilled operators, and entry-level operators with a low skill level, respectively. As described above, a plurality of message groups can be prepared according to different levels of operator skill with the machine.

According to a conventional practice, when a message in one of these message groups is corrected or modified, the editing means 107 in the sequence program editing apparatus 10 first reads the entire sequence program stored in the source program memory section 100, and then corrects or modifies the message.

In this case, there has been a risk of non-message data being corrected or modified. The present invention deals with this problem by reading only the message data to be edited. The present invention also enables transfer of only message data when the sequence program is transferred to the numerical controller 20 or another unit that controls the machine.

The message group selecting means 101 selects the message groups to be transferred or corrected. The message groups selected by the message group selecting means 101 are converted to transmissible data by the data converting means 102, and then stored in the first memory section 103 provided as message data storage means, which is an area different from the source program memory section 100. FIG. 1 shows an example in which the first, second, and third message groups are stored in the first memory section 103.

If there is no need for correction, modification, or further editing of the message groups stored in the first memory section 103, these message groups are transferred to the programmable controller 201 in the numerical controller 20. If any of the message groups stored in the first memory section 103 needs to be edited, however, the message group is selected by the message group selecting means 104; the selected message group is converted by the data invewrting means 105 to the original data (that is, the transmissible data generated by the data converting means 102 is restored to the original data form); the inverted message group data is then stored in the editing memory section 106. In the example shown in FIG. 1, the first to third message groups stored in the first memory section 103 are all selected and stored in the editing memory section 106.

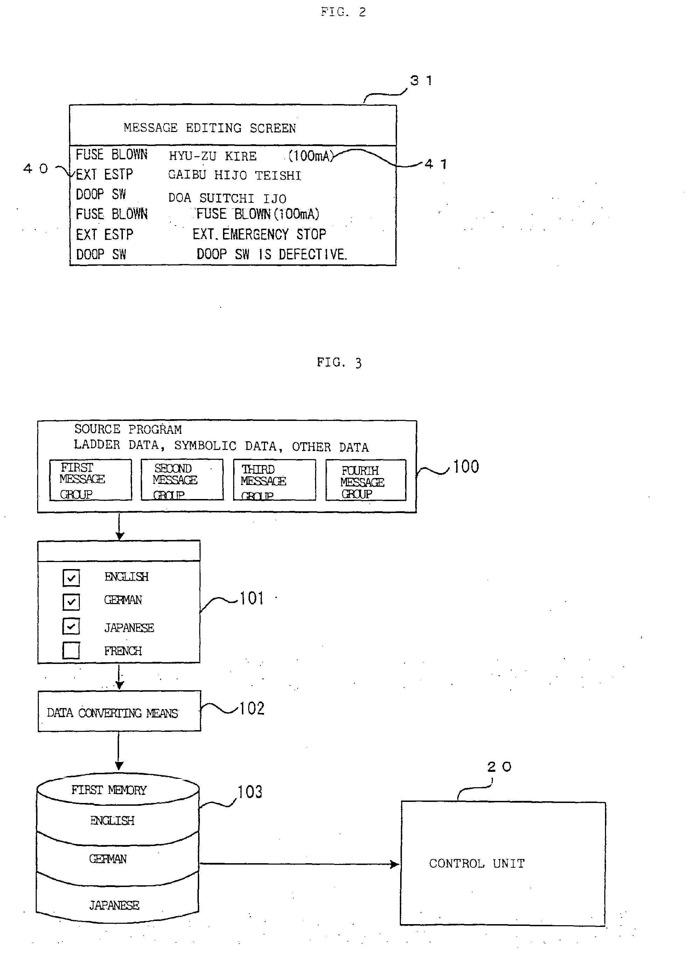

The message groups stored in the editing memory section 106 are displayed on the display screen of a display unit 31 and edited by the editing means 107. FIG. 2 shows an exemplary display screen on the display unit 31, in which symbols 40 and corresponding message texts 41 are displayed. In the example shown in FIG. 2, message groups in different languages are prepared separately; the first message group is in Japanese and the second message group is in English. Although only the message groups in Japanese and English are displayed on the display screen in FIG. 2, a third message group in, for example, German, is also stored in the editing memory section 106 together with the first and second message groups. For example, the Japanese message text "hyu-zu kire (100 mA)" may be displayed in correspondence to "FUSE BLOWN" in the symbols 40. The English message text "FUSE BLOWN (100 mA)" may be displayed in correspondence to, again, "FUSE BLOWN" in the symbols 40.

An operator views the message texts displayed on the display screen of the display unit 31 and performs a conventional editing process for correcting or modifying message data, using a keyboard or other input device.

The corrected or modified message data is substituted for the corresponding message group data in the editing memory section 106, and stored therein.

When the edited message groups are sent to the programmable controller in the numerical controller or another controller, the message groups are first selected by the message group selecting means 108; the data of the selected message groups is reformatted by the data converting means 109 so that the data of the message groups can be sent; the converted message group data is stored in the second memory section 110 used as the message data storage means. In the example shown in FIG. 1, the first and second message groups are stored in the second memory section 110. The data of the message groups stored in the second memory section 110 is sent by a transmission command through a data transmission means 34 to the programmable controller 201 in the numerical controller 20.

Upon completion of the editing of the message groups by the editing means 107, the corresponding message groups stored in the source program memory section 100 are also replaced with the message group data corrected or modified during the editing. If the editing memory section 106 stores the data of only one message group, the message selecting means 108 is not necessary; the data of the message group stored and edited in the editing memory section 106 may then be converted by the data converting means 109 to transmissible data form and stored in the second memory section 110.

The message groups stored in the programmable controller 201 in the numerical controller or another controller can also be read out according to a message group read command from the sequence program editing apparatus 10. Specifically, when a read command specifying the first memory section 103 or second memory section 110 is issued, the message group data in the memory 203 in the programmable controller 201 can be stored in the specified memory section 103 or 110 through the data transmitting means 34.

When one of the message groups read into the second memory section 110 is edited, the message group is selected by the message group selecting means 111, the transmissible data of the message group is converted by the data inverting means 112 to editable form, and the inverted data is stored in the editing memory section 106. The message data in the message group is then edited for modification, correction, or the like by the editing means 107, as described above. When the message group stored in the first memory section 103 is edited, the message group is stored in the memory section 106 as described above before the message group is edited.

A sequence program is stored in advance in the memory 203 in the programmable controller 201 in the numerical controller 20, which controls a machine. Alternatively, the sequence program stored in the source program memory section 100 in the sequence program editing apparatus 10 may be stored in the memory 203 in the programmable controller 201 through the data transmitting means 34. In this case, all data in the sequence program, including data of the message groups, is stored in the memory 203 in the programmable controller 201. Alternatively, the ladder data, symbolic data, and other data, excluding the message data, may be sent to and stored in the memory 203.

The necessary message groups are then selected, sent from the first memory section 103 or second memory section 110 to the memory 203 in the programmable controller 201, and stored therein, overwriting the existing message data in the memory 203. If only necessary message groups are stored in this way, a memory of a small size is sufficient as the memory 203 in the programmable controller 201.

After the sequence program is thereby stored in the programmable controller 201 in the numerical controller 20 that controls the machine, the numerical controller 20 begins operation. If, for example, a fuse blown event 202 occurs during operation, the sequence program turns on the signal at address A10.0 accordingly (see reference numeral 204). The symbol "FUSE BLOWN" stored in correspondence to the address A10.0 at which the signal has been turned on is read from symbolic data 205; the message text stored in correspondence to the symbol "FUSE BLOWN" is then read from message data 207. Then, a message set by a display message setting means 206 is selected. In the example shown in FIG. 1, in which the messages have been grouped by language, the display message setting means 206 is set so as to select a language. English is selected by the display message setting means 206 in the example in FIG.1. The text "FUSE BLOWN (100 mA)" corresponding to the symbol "FUSE BLOWN" in the message groups in English is therefore read from the message data 207; the text is displayed together with an alarm on the display unit 31 of the numerical controller 20. The above example uses the symbol corresponding to the signal to select the message to be displayed, but the address of the signal may be used to select the message to be displayed.

FIG. 3 shows an example in which the messages are grouped by language. The source program memory section 100 stores a first message group in English, a second message group in German, a third message group in Japanese, and a fourth message group in French; the message group selecting means 101 selects the message groups by selecting their languages: English, German, Japanese, or French. The data of the selected message groups (in English, German, and Japanese in FIG. 3) are converted to transmissible data, and then stored in the first memory section 103. The message groups are sent to the numerical controller 20 through the data transmitting means 34. In practice, the selected message groups may be stored in the editing memory section 106 and edited, and the edited message groups may be stored in the second memory section 110 before the message groups are sent to the numerical controller 20; however, this process is omitted in FIG. 3.

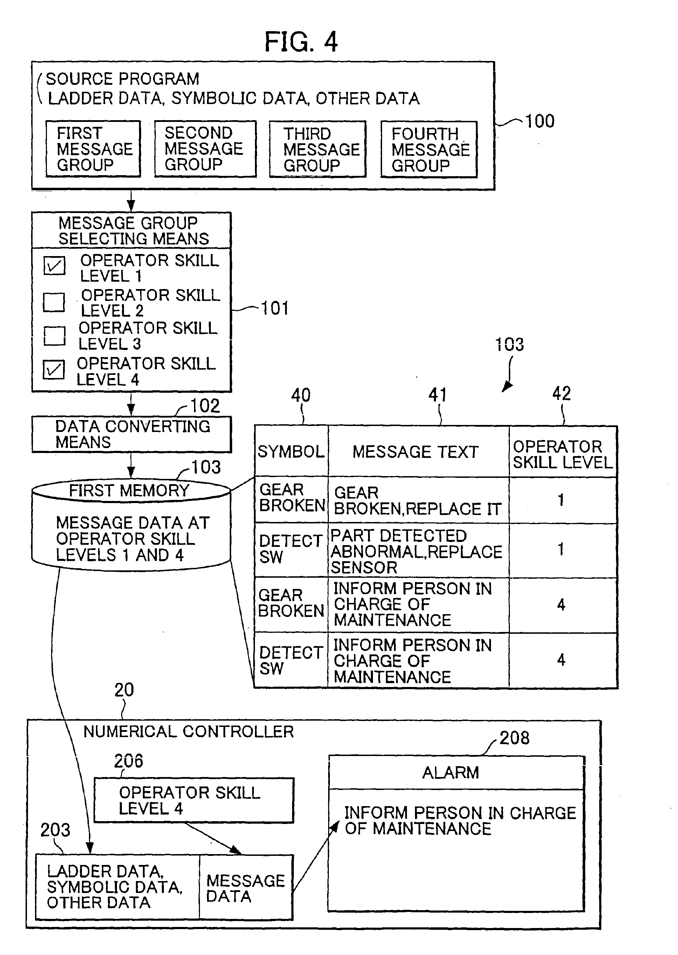

FIG. 4 shows another example, in which first to fourth message groups are prepared according to operator skill levels and stored in the source program memory section 100.

The message groups selected by the message group selecting means 101 according to the operator skill levels are converted by the data converting means 102 to transmissible data form; the converted message groups are stored in the first memory section 103. In the example shown in FIG. 4, operator skill levels 1 and 4 are selected, and the first and fourth message groups are selected accordingly. The exemplary data stored in the first memory section 103 is indicated by reference numeral 103'. Symbols 40 as well as the corresponding message texts 41 and operator skill levels 42 are stored; message texts 41 become different from each other for a symbol 40 if corresponding operator skill levels 42 are different from each other. For the symbol "GEAR BROKEN" with operator skill level 1, for example, the message text "gear broken, replace it" may be stored; when the operator skill level for the symbol is 4, the message text "inform person in charge of maintenance" may be stored.

The data of the message groups stored in the first memory section 103 is sent to the memory 203 that stores the sequence program for the programmable controller in the numerical controller 20; the data is then treated as the message group data of the sequence program. A message group to be displayed is selected by the display message setting means 206. In FIG. 4, in which operator skill levels are used to select message groups to be displayed, when operator skill level 4 is selected, if a gear is broken and the symbol "GEAR BROKEN" is selected, the message " inform person in charge of maintenance" at operator skill level 4 is displayed on the screen of the display unit 31 of the numerical controller. Omitted from FIG. 4 is the transfer to the numerical controller 20 of message groups that have been stored in the editing memory section 106 or edited by the editing means and then stored in the second memory section 110.

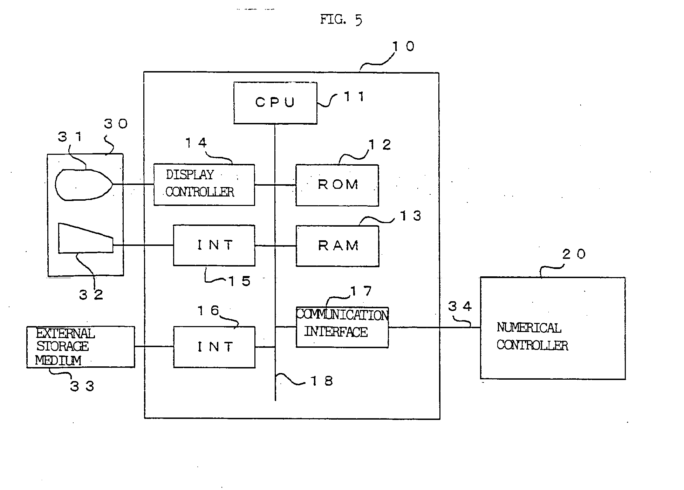

FIG. 5 is a block diagram indicating the main elements of a sequence program editing apparatus 10 embodying the present invention. The sequence program editing apparatus 10 comprises a processor 11 as well as a ROM 12, a RAM 13, a display controller 14, interfaces 15 and 16, a communication interface 17, and other components that are all connected to the processor 11 via a bus 18. The processor 11 reads a system program stored in the ROM 12 via the bus 18 and controls the entire sequence program editing apparatus according to the system program. A program for executing editing functions is also stored in the ROM 12.

The RAM 13 is used to store a sequence program recorded in an external storage medium via the interface 16 and also to store the message groups described above and other data. The storage area of the RAM 13 is therefore divided into the source program memory section 100 for storing the sequence program, the first memory section 103, the second memory section 110, and the editing memory section 106.

The display controller 14 is connected to the display unit 31 in the display unit/data input unit 30. Interface 15 is connected to a data input means 32, such as a keyboard and mouse, in the display unit/data input unit 30. The ladder data and the above-mentioned messages of the sequence program are displayed on the display unit 31. The keyboard or other data input means 32 can then be used to edit the sequence program and the above-mentioned message groups.

The sequence program editing apparatus 10 is connected to the external storage medium 33 through interface 16; in this arrangement, the sequence program is input from the external storage medium 33, and the sequence program and other data edited on the sequence program editing apparatus 10 are stored in the external storage medium 33.

The communication interface 17 is connected to the control unit (the numerical controller 20 for controlling a machine tool) that includes the programmable controller through a signal line or communication network 34 provided as the data transmission means.

This completes the description of the main elements constituting the sequence program editing apparatus that embodies the present invention; its structure is the same as that of known conventional sequence program editing apparatus. As described above, however, the present invention differs from the prior art in that it is possible to retrieve message data from the sequence program and edit only the retrieved messages, and in that message groups can be selected and sent to or received from the memory 203 in the programmable controller 201 in the numerical controller 20.

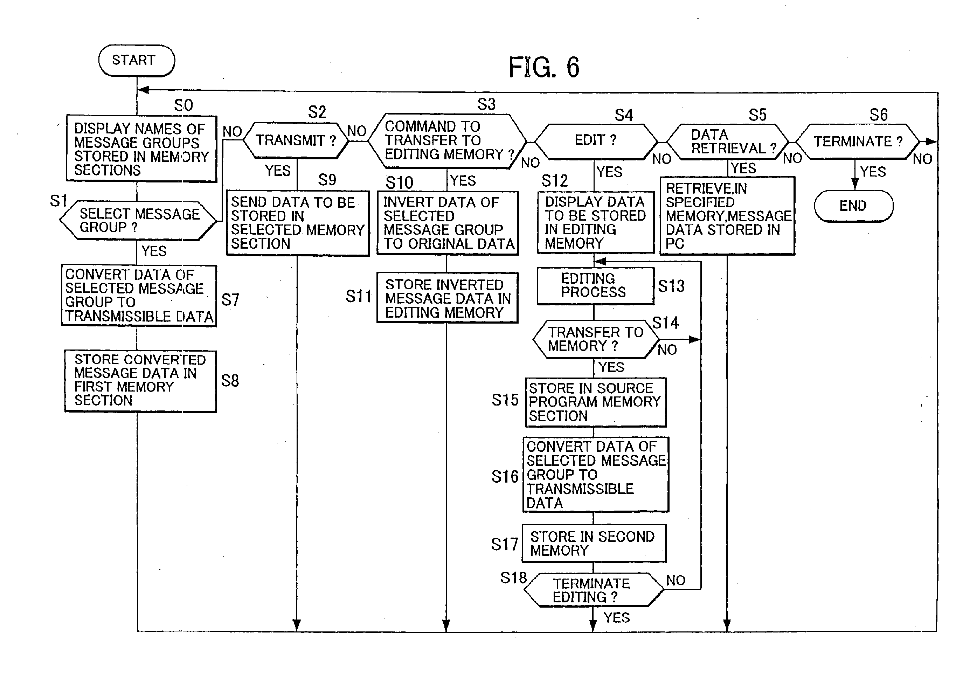

FIG. 6 is a flowchart illustrating message group transmission and editing processes executed by the sequence program editing apparatus 10.

When the sequence program editing apparatus 10 is switched over to the message group transmission and editing mode, the processor 11 starts the processing shown in FIG. 6.

First, the names of the message groups stored in the source program memory section 100, first memory section 103, second message section 110, and editing memory section 106 are displayed on the screen of the display unit 31 separately for each memory (step S0); if the messages are grouped by language, the names of the message groups are Japanese, English, German, French, and other languages; if the messages are grouped by operator skill level, the names of the message groups are operator skill levels 1, 2, .... Message groups are originally stored only in the source program memory section 100; in this case, only the message groups stored in the source program memory section 100 are displayed.

Next, a determination process is performed repeatedly with the keyboard or other data input means 32 to determine whether or not a message group has been selected (step S1), whether or not a transmission command has been input (step S2) , whether or not command for a transfer to the editing memory section 106 has been input (step S3), whether or not an editing command has been input (step S4), whether or not a command for retrieving a message group from the programmable controller in the numerical controller or another controller has been input (step S5), and whether or not the message group transmission and editing mode has been switched and terminated (step S6).

When a message group is selected (step S1; determination Yes), the selected message group is read out from the source program memory section 100 in the RAM 13 and converted to transmissible data (step S7); the converted message group data is stored in the first memory section 103 in the RAM 13 (step 8). Then, the processing returns to step S0. In step S0, the names of the message groups stored in the first memory section 103 are displayed in correspondence to the first memory section 103. Each time a message group is selected, the processes in steps S1, S7, S8, and S0 are performed.

Once one or more selected message groups are stored in the first memory section 103 as described above, the operator may select a message group indicated on the display as being stored in the first memory section 103 or second memory section 110 to modify, correct, or otherwise edit the message group, and input a command that transfers the message group to the editing memory section 106; upon detection of the command (step S3; determination Yes) , the processor 11 restores the data of the selected message group, which has been converted to transmissible form, to the original data (step S10); the inverted data is stored in the editing memory section 106 (step S11), returning the sequence to step S0. In step S0, the name of the message group newly stored in the editing memory section 106 is displayed in correspondence to the editing memory section. Each time a command for a transfer to the editing memory section 106 is input, the processes in steps S3, S10, S11, and S0 are performed.

When the operator inputs an editing command in order to edit a message (step S4; determination Yes), the message texts 41 in the message groups stored in the editing memory section 106 are displayed on the display screen of the display unit 31 in correspondence to the symbols 40, as shown in FIG. 2 (step S12). The names of the message groups stored in the editing memory section 106 are displayed at the bottom of the screen in correspondence to soft keys. The operator views the symbols 40 and the corresponding message texts 41 displayed on the display screen, and uses the keyboard or other data input means 32 to perform the same editing processing as in the prior art (step S13). Then it is determined whether or not a transfer command has been input that transfers the edited message group to a memory (step S14); if not, the sequence returns to step S13 and continues the editing process.

When one message group has been edited, its name is selected by a soft key and a transfer to memory command is input. The processor detects the input (step S14) , transfers the selected message group to the source program memory section 100, and stores the selected message group by overwriting the associated old message group (step S15). The message group is further converted to transmissible data (step S16) and stored in the second memory section 110 (step S17). Whether or not an editing completion command has been input is determined (step S18); if not, the sequence returns to step S13 and continues the editing process.

If an editing completion command is input (step S18; determination Yes), the sequence returns to step S0 and changes the display screen of the display unit 31 to a display of the names of the message groups initially stored in the memory sections. Since the new message groups have been stored by the editing process in the second memory section 110, the names of these message groups are displayed in correspondence to the second memory section.

If the operator inputs a command for message group transmission to the numerical controller 20, specifying the first memory section 103 or second memory section 110 (step S2), the processor 11 sends the message group to be stored in the specified first memory section 103 or second memory section 110 to the sequence program storage section 203 in the programmable controller 201 in the numerical controller 20 via the signal line, network, or other data transmission means 34 (step S9).

When a message group stored in the programmable controller 201 in the numerical controller 20 is retrieved, a data retrieving command specifying the first memory section 103 or second memory section 110 as the destination memory section is first input; the processor 11 then detects the command in step S5, reads out the message group stored in the programmable controller (PC) via the signal line, network, or other data transmission means 34, and stores the message group in the first or second memory section (step S19) . The message group data stored in the first or second memory section is edited as described above, or overwritten into the source program memory section 100.

Then, the message group transmission and editing mode is switched (step S6) , terminating the processing.

In the above embodiment, a data transmission means such as a communication line or network is used to send message group data from the sequence program editing apparatus to the programmable controller in the numerical controller or another controller; instead of using this type of communication means, however, the message group data may be stored on a storage medium and entered in the programmable controller via the storage medium. When this is done, the data transmission process in step S9 shown in FIG. 6 is replaced with a process for storage on the external storage medium 33 through the interface 16.

## Claims

1. A sequence program editing apparatus for editing messages, the messages being displayed on a display screen while a programmable controller is in operation, the sequence program editing apparatus comprising:
source program storage means (100) storing a sequence program that includes a plurality of message groups;
first selecting means (101) for selecting any one of the message groups from the source program storage means (100);
first data converting means (102) for converting data of the message group selected by the first selecting means (101) to message group data transmissible to the programmable controller (201); and
first storage means (103) for storing the message group data generated by the first data converting means (102).

2. The sequence program editing apparatus according to claim 1, further comprising:
second selecting means (104) for selecting any one of the message groups stored in the first storage means (103);
data inverting means (105) for converting the transmissible message group data generated by the first data converting means (102) to the original message group data from which the transmissible message group data was generated;
editing storage means (106) for storing for editing purposes the message group data generated by the data inverting means (105);
editing means (107) for editing the message group data stored in the editing storage means (106);
second data converting means (109) for converting the message group data stored in the editing storage means (106) to message group data transmissible to the programmable controller (201); and
second storage means (110) for storing the message group data generated by the second data converting means (109).

3. The sequence program editing apparatus according to claim 2, further comprising third selecting means (108) for selecting any one of the message groups stored in the editing storage means (106),
wherein the second data converting means (109) converts message group data stored in the editing storage means (106) and selected by the third selecting means (108) to message group data transmissible to the programmable controller (201).

4. The sequence program editing apparatus according to any one of claims 1 to 3, further comprising data transmission means (34) for sending message group data, which is transmissible to the programmable controller (201) and stored in the first storage means (103), to the programmable controller (201), and for receiving message group data stored in the programmable controller (201).

5. The sequence program editing apparatus according to any one of claims 1 to 4, wherein the plurality of message groups are in different languages.

6. The sequence program editing apparatus according to any one of claims 1 to 4, wherein the plurality of message groups are prepared for different operator skill levels.
